# EUROPEAN PATENT APPLICATION

(11) **EP 2 476 569 A1**
(43) Date of publication of application: **18.07.2012**
(21) Application number: 12150432.8
(22) Date of filing: 09.01.2012
(51) Int. Cl.: B60K 7/00, B62D 12/00, B62D 61/08

(54) **Vehicle comprising jib and counterweight formed by wheel and motor**

(30) Priority: 14.01.2011 NL 2006008
(71) Applicant: Mosterman, Pascal, 7943 HC Meppel (NL)
(72) Inventor: Mosterman, Foppe Johannes, 9932 AA Delfzijl (NL)
(74) Representative: Klavers, Cornelis

(57) **Abstract**

A description is given of a vehicle (1), such as an agricultural or forestry vehicle, comprising one or more wheels (2) and a jib (3) on one side of the vehicle. On the opposite side, a combination of the at least one wheel (2-1) and a driving motor (10) is provided which is rotatable in a horizontal plane with respect to the vehicle (1). An advantage of the vehicle in accordance with the invention is that the combination is in a mechanically balanced position with respect to the jib (3) of the vehicle or can be manoeuvred into such a balanced position. By virtue thereof, particularly when the vehicle is in operation, an improved balance can be achieved when a mechanical load is applied to the jib (3).

## Description

The present invention relates to a vehicle, such as an agricultural or forestry vehicle, comprising one or more wheels and a jib on one side of the vehicle.

Such a vehicle is generally known and is used, in practice, for example for earth moving or for excavation or mowing operations, or, for example, for ditch and road shoulder maintenance, wherein the necessary implements are attached to the jib. The jib operates almost always on one side of the vehicle, as a result of which, the vehicle will tend to heel over to that side when the various operations are being performed. The mechanical load on the vehicle, which generally has a high ground clearance, and the corresponding wear of the vehicle, in particular of parts thereof, such as chassis, bearings, tires, suspension, shock absorbers and the like are consequently to one-side.

It is an object of the present invention to provide an improved vehicle which exhibits a greater degree of stability when performing various operations in the field.

To achieve this, the vehicle in accordance with the present invention is characterised in that, on the opposite side, a combination of the at least one wheel and a driving motor is provided which is rotatable in a horizontal plane with respect to the vehicle.

An advantage of the vehicle in accordance with the invention is that the combination is in a mechanically balanced position with respect to the jib of the vehicle or can be rotated into such a balanced position. By virtue thereof, particularly when the vehicle is in operation, an improved balance can be achieved when a mechanical load is applied to the jib. This improved balance can be maintained even during movement of the jib or can be optimized, which can be attributed to the fact that also during operation, the combination can be rotated in a horizontal plane with respect to the mechanically, dynamically loaded jib. The improved stability is achieved, in particular, by means of a proper, if necessary dynamical, arrangement and positioning of the components already present in such a vehicle, such as a wheel or wheels in combination with driving means for the vehicle, in particular a motor or motors. As, generally speaking, these components are already present in the vehicle, the stability improvement achieved is not at the expense of a higher weight of the vehicle in accordance with the invention.

In addition, when the vehicle carries out operations, the motion to and fro of a cab present on the vehicle and accommodating the driver and operator of the jib to which the implements are attached will be reduced by virtue of the improved balance. By virtue of the reduction of the inconvenient motions during operation, the work can be carried out in a simpler manner, and the ergonomic conditions for the operator(s) in the cab on the vehicle in accordance with the invention are improved. A further advantage resides in that the mechanical load on the vehicle and the wear of the parts thereof will be less to one side of the vehicle, more predictable and more uniform by virtue of the counterweight of the combination opposite the jib put under load.

An embodiment of the vehicle is characterised in accordance with the invention in that the vehicle comprises a swivelling arm which can swivel with respect to the vehicle, the rotatable combination being attached to said arm.

An advantage of this embodiment is that the degree of flexibility and the possible applications of the vehicle are further improved and increased by virtue of the fact that in addition to the combination being rotatable, the arm with which the combination is attached to the vehicle is constructed so as to be swivable. This additionally leads to an improved manoeuvrability and movability of the vehicle in accordance with the invention. Obviously, when the invention is put into practice the application of both the rotatable combination and the rotatable combination which is provided on the swiveling arm, is preferred.

A further preferred embodiment of the vehicle in accordance with the invention is characterised in that said vehicle is provided with a rotatable cab which is possibly constructed as a cab which rotates integrally with the jib.

In practice, a further improvement of the ergonomic conditions of the operator(s) in the cab, which already moves less unpleasantly with the load, is achieved by the fact that the rotating cab, or the cab rotating with the jib, provides and maintains a direct view of the work carried out by the implements attached to the jib. Moreover, the operator(s) no longer have to sit in an oblique position and/or look back at an angle in order to keep a view of the job while operating the various controls and being moved to and fro vehemently.

The vehicle in accordance with the invention will now be explained in greater detail by means of the following diagrammatic figures, in which corresponding parts bear the same reference numerals. In the figures:
Figures 1A and 1B are side views of an embodiment of the vehicle in accordance with the invention; and
Figures 2A, 2B, 2C, and 2D are plan views of the embodiment of the vehicle in accordance with the invention.

The above-mentioned figures show, respectively, side views and plan views of a vehicle 1, which can be used, for example, as a tractor or in the forest or, in agriculture, in the fields. Such a vehicle 1 generally has four wheels. The figures show an embodiment comprising a front wheel 2 - 1 and two rear wheels 2 - 2, 2 - 3. The vehicle 1 shown further comprises a jib 3 to which exchangeable implements can the attached. Examples of such implements include mowing elements, cutting elements, sawing elements such as a branch cutting saw, milling elements such as a stump milling cutter, branch removing elements, hoisting elements and the like for, for example, maintenance of ditches or road shoulders. In particular, the figures show an embodiment of the vehicle 1 in which the boom or jib 3 comprises a shovel or digging element in the form of a bucket 4. Said vehicle 1 comprises a chassis 5 and controllable swivelling members 6 which are attached to the chassis 5, and which are arranged, as shown in the figures, between the two rear wheels 2 - 2, 2- 3. The jib 3 is articulated and the various sections 7 - 1, 7 - 2, as well as the jib 3 as a whole, and the exchangeable implements, in particular the bucket 4, are individually controllable by means of, generally hydraulic, means 8 shown which, in turn, are controllable from a cab 9 present on the vehicle 1 in order to enable proper operation and manipulation of the implements.

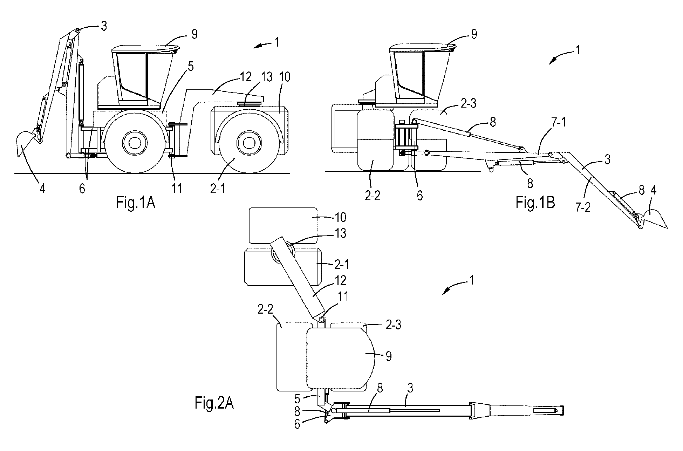

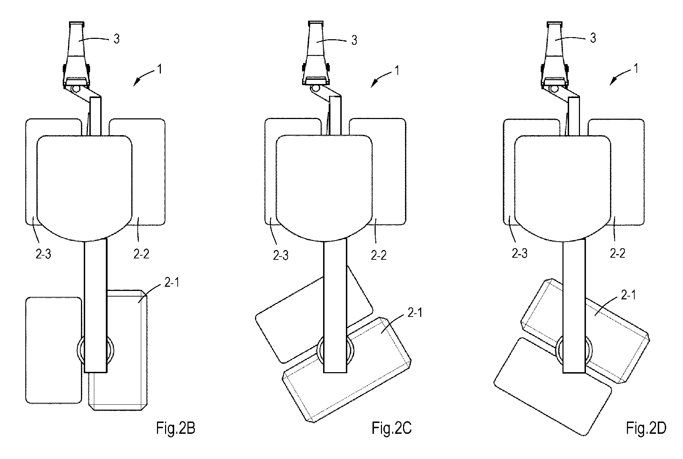

The jib 3 which, as shown in figure 2A, may cover the lower half-plane, is operational, in this case, on the rear side of the vehicle. The above - mentioned bucket 4 can be used, for example, to dig a groove or deepen a ditch. In general, the various implements then apply a mechanical load to the rear side of the vehicle 1, as a result of which the vehicle will be somewhat inclined to that side and the cab and the personnel accommodated therein may be severely shaken, in particular when the vehicle comprises high wheels and is subjected to varying loads on the jib 3.

On the opposite side, in this example on the front side of the vehicle 1, a combination of the at least one wheel, here 2 - 1, and a driving motor 10 is provided, which combination is rotatable in a horizontal plane with respect to the vehicle 1. In a practical preferred embodiment, the combination, which serves as a counterweight, can be swivelled by means of appropriate, controllable swivelling members 11 and an arm 12 to which the rotatable combination is connected, here through controllable rotating members 13. In this manner, the forces and moments exerted on the vehicle 1 can be balanced at least to some extent, as a result of which the above mentioned inclination to one side, motion or swinging of the cab 9 are reduced. A further improved balance is achieved when also the controllable swivelling members 11 are employed, as a result of which the arm 12 with the rotatable combination can be swivelled, in the example shown, in the upper half - plane of figure 2A. After all, the above mentioned forces and moments exerted on the vehicle through the respective swivelling members 6 and 11 can then be dynamically balanced and kept in a balanced state by manual or, possibly, partially automated control. In this specific case, the controllable swivelling members 11 are situated at one end of the swivelling arm 12 shown, and the controllable rotating members 13 are situated at the other and of said arm 12.

If made necessary by the expected forces and moments, then the combination can be provided, during the manufacture thereof, with one or more pumps, not shown in the figures, in particular hydraulic pumps which can also form a substantial counterweight. If required, the pumps can be assembled together with the combination of the motor 10 and the at least one wheel 2 - 1.

In the embodiment shown in the various figures, the vehicle comprises the swivelling arm 12, which can be swivelled with respect to the vehicle and to which the rotatable combination is attached, while the rotatable combination is attached under the swivelling arm 12 and hence can be made to rotate under it by means of the rotating members 13. In practice, the swivelling arm 12 is the front most part of an articulated chassis.

With respect to the above - mentioned cab 9, it is preferred that said cab is rotationally provided on the vehicle 1, thereby enabling a good view of the work at all times. The rotatable cab 9 is possibly constructed as a cab which rotates integrally with the boom or jib 3.

Preferably, the jib 3 is constructed so as to comprise swivelling members 6 with a substantially vertical boom, which is adjustable however from the vertical, in particular a hydraulic boom. By virtue thereof, a somewhat inclined or buckled position of the jib 3 becomes possible, enabling the mutual distance between the combination and the implements generally attached at the end of the boom to be temporarily increased, if desired.

The combination of articulated and front wheel steering, wherein the angle of the steering wheel movement of the front wheel is not limited by the driving motor, chassis or other components of the vehicle, offers maximum manoeuvrability. This applies in spite of the generally large wheels, so that nevertheless a compact whole is obtained.

## Claims

1. Vehicle, such as an agricultural or forestry vehicle, comprising one or more wheels and a jib on one side of the vehicle, **characterised in that** on the opposite side, a combination of the at least one wheel and a driving motor is provided which is rotatable in a horizontal plane with respect to the vehicle.

2. Vehicle as claimed in claim 1, **characterised in that** the combination comprises one or more pumps, in particular hydraulic pumps.

3. Vehicle as claimed in claim 1 or 2, **characterised in that** the at least one wheel is a front wheel.

4. Vehicle as claimed in any one of the claims 1 to 3, **characterised in that** the jib is mounted on the rear side of the vehicle.

5. Vehicle as claimed in any one of the claims 1 to 4, **characterised in that** the jib is mounted between wheels, particularly rear wheels, of the vehicle.

6. Vehicle as claimed in any one of the claims 1 to 5, **characterised in that** the vehicle comprises a swivelling arm which can swivel with respect to the vehicle, the rotatable combination being attached to said arm.

7. Vehicle as claimed in claim 6, **characterised in that** the combination is rotatably attached under the swivelling arm.

8. Vehicle as claimed in any one of the claims 1 to 7, **characterised in that** the vehicle comprises one front wheel and two rear wheels.

9. Vehicle as claimed in any one of the claims 1 to 8, **characterised in that** the jib is provided with exchangeable implements, such as mowing elements, cutting elements, sawing elements such as a branch cutting saw, milling elements such as a stump milling cutter, branch removing elements, shovel or digging elements, hoisting elements and the like for, for example, maintenance of ditches, fields or road shoulders.

10. Vehicle as claimed in any one of the claims 1 to 9, **characterised in that** the vehicle is provided with a rotatable cab which is possibly constructed as a cab which rotates integrally with the jib.

11. Vehicle as claimed in any one of the claims 1 to 10, **characterised in that** the jib is constructed so as to comprise swivelling members with a substantially vertical boom, which possibly is adjustable from the vertical, in particular a hydraulic boom.
